# EUROPEAN PATENT APPLICATION

(11) **EP 2 762 250 A1**
(43) Date of publication of application: **06.08.2014**
(21) Application number: 11873423.5
(22) Date of filing: 28.09.2011
(51) Int. Cl.: B22C 9/06, B22C 3/00, B22D 17/20, C01B 31/02

(54) **MEMBER FOR CASTING, CASTING METHOD, AND METHOD FOR PRODUCING LUBRICANT USED THEREFOR**

(71) Applicant: Toyota Jidosha Kabushiki Kaisha, Toyota-shi, Aichi 471-8571 (JP)
(72) Inventor: SOTOZAKI, Shuji, Toyota-shi Aichi 471-8571 (JP); FURUKAWA, Yuichi, Toyota-shi Aichi 471-8571 (JP)
(74) Representative: Winter, Brandl, Fürniss, Hübner, Röss, Kaiser, Polte - Partnerschaft
(86) International application number: PCT/JP2011/072236
(87) International publication number: WO 2013/046370

(57) **Abstract**

In the invention, a nano carbon layer that is constituted by a nano carbon group is formed on a molten metal contact surface of a casting member, and a lubricant that has a pulverulent body, which is constituted by BN, graphite, talc or silica, as a main component is applied onto the nano carbon layer. It is preferable that a nitrided layer be formed between the nano carbon layer and the molten metal contact surface of the casting member when the nano carbon layer is formed, and that the lubricant applied to the nano carbon layer have a BN pulverulent body as a main component. According to the invention, the mold releasability and fluidity of the casting member can be maintained even if the number of times of casting is increased, and the cost of the process of subjecting the molten metal contact surface of the casting member to the surface treatment can be reduced.

## Description

### TECHNICAL FIELD

The invention relates to a casting member, a casting method, and a method of manufacturing a lubricant used for casting.

### BACKGROUND ART

Conventionally, there has been known an art of forming a predetermined membrane on a molding surface (a molten metal contact surface) of a mold with a view to reducing the mold release resistance in die casting or the like (e.g., see Patent Document 1).

In Patent Document 1, there is disclosed an art of forming a membrane on a molding surface of a mold by coating a surface of a base material of the mold with a nano carbon film containing a nano carbon group such as carbon nano tubes and the like and applying a fullerene group thereonto. In this case, the gap of the nano carbon film is filled with the fullerene group, and irregularities on the surface of the nano carbon film are subdued to reduce the mold release resistance.

### Related Art Document

### Patent Document

Patent Document 1: Japanese Patent Application Publication No. 2010-36194 (JP-2010-36194 A)

### SUMMARY OF THE INVENTION

### Problem to Be Solved by the Invention

On the other hand, there is a knowledge that in the case where a casting process is promoted through the use of a casting mold on which the nano carbon film and a fullerene film are formed, the surface of the base material is impregnated with the fullerene group. There is also a knowledge that due to this impregnation of the surface of the base material with the fullerene group, a membrane is strengthened and contributes toward prolonging the life of the mold, but causes a decrease in fluidity.

Besides, it is generally known that the cost of the process of applying the fullerene group is high.

It is a task of the invention to provide a casting member that maintains mold releasability and fluidity even when casting is carried out a large number of times. Besides, it is another task of the invention to provide an art capable of realizing, at low cost, a process of applying a lubricant to a molten metal contact surface of a casting member and performing a surface treatment, for the purpose of, for example, omitting a process of applying a mold releasing agent to a cavity surface of a casting mold for each casting process, softening casting conditions such as a fall in the temperature of a molten metal, a pressure resistance and the like on a molten metal contact surface of the casting member, and the like.

### Means for Solving the Problem

In a casting member according to the invention, a nano carbon layer that is constituted by a nano carbon group is formed on a molten metal contact surface of the casting member, and a lubricant having a pulverulent body that is constituted by BN, graphite, talc or silica as a main component is applied onto the nano carbon layer.

The casting member in the invention is a member that is used for casting such as die casting, vacuum casting or the like, and refers to, for example, a member included in a casting device such as a mold, a plunger sleeve, a plunger chip or the like.

It is preferable that a nitrided layer be formed between the nano carbon layer and the cavity surface when the nano carbon layer is formed, and that the lubricant that is applied to the nano carbon layer have a BN pulverulent body as a main component.

It is preferable that irregularities of 10 µm or less be formed on a surface of the nano carbon layer, and that a powder diameter of the pulverulent body contained in the lubricant be smaller than a size of the irregularities of the nano carbon layer.

A casting method according to the invention includes a process of forming a nano carbon layer that is constituted by a nano carbon group, on a molten metal contact surface of a casting member, and a process of subjecting the molten metal contact surface of the casting member to a surface treatment by applying a lubricant, which has a pulverulent body constituted by BN, graphite, talc or silica as a main component, onto the nano carbon layer.

The casting member in the invention is a member that is used for casting such as die casting, vacuum casting or the like, and refers to, for example, a member included in a casting device such as a mold, a plunger sleeve, a plunger chip or the like.

It is preferable that a nitrided layer be formed between the nano carbon layer and the molten metal contact surface of the casting member in the process of forming the nano carbon layer on the molten metal contact surface of the casting member, and that the lubricant that is applied to the nano carbon layer have BN as a main component.

It is preferable that irregularities of 10 µm or less be formed on a surface of the nano carbon layer, and that a powder diameter of the pulverulent body contained in the lubricant be smaller than a size of the irregularities of the nano carbon layer.

A method of manufacturing a lubricant according to the invention includes mixing a pulverulent body contained in the lubricant with a fatty acid wax, heating a resultant mixture and melting the fatty acid wax to liquefy the mixture, stirring and homogenizing the liquefied mixture, and coagulating the mixture in a mold of an arbitrary shape to manufacture a solid lubricant.

### Effect of the Invention

According to the invention, the mold releasability and fluidity of the casting member can be maintained even if the number of times of casting is increased, and the cost of the process of subjecting the molten metal contact surface of the casting member to the surface treatment can be reduced.

### BRIEF DESCRIPTION OF THE DRAWINGS

[FIG. 1] FIG. 1 is a view showing a casting mold.
[FIG. 2] FIG. 2 is a view showing a surface treatment of a cavity surface.
[FIG. 3] FIG. 3 is a view showing the shape of a cast used for a BN evaluation test.
[FIG. 4] FIG. 4 is a view showing a result of the BN evaluation test.
[FIG. 5] FIG. 5 is a view showing a testing device used for a thermal insulation test of a membrane.
[FIG. 6] FIG. 6 is a graph showing a result of the thermal insulation test of the membrane.
[FIG. 7] FIG. 7 is a view showing a process of manufacturing a solid lubricant.

### MODE FOR CARRYING OUT THE INVENTION

### [Casting Mold]

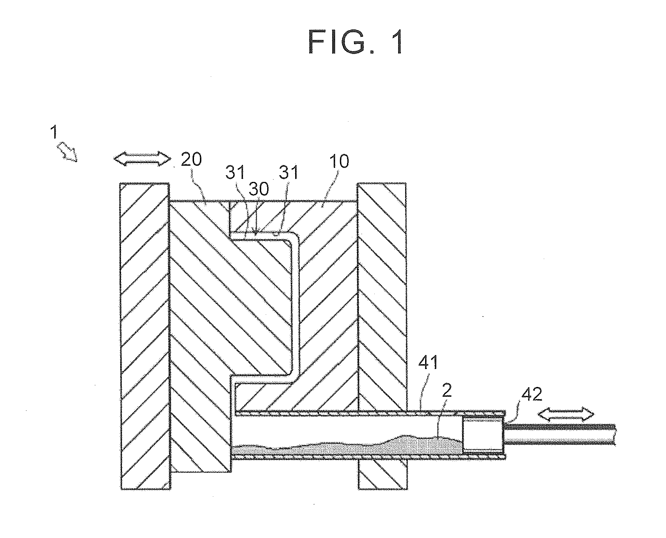

As shown in FIG. 1, a casting mold 1 is equipped with a fixed mold 10 and a movable mold 20 as casting members. The fixed mold 10 and the movable mold 20 are made of a steel material of an alloy steel tool (JIS G4404) such as SKD61 or the like. The fixed mold 10 and the movable mold 20 are fixed to a support device and a moving device respectively.

In a mold closing state of the casting mold 1, a cavity 30 is formed between the fixed mold 10 and the movable mold 20. A molten metal 2 such as a molten aluminum alloy or the like that is supplied into the cavity 30 is coagulated in the mold, whereby a cast corresponding to the shape of the cavity 30 is obtained. The cavity 30 is defined by cavity surfaces 31 and 31 of the fixed mold 10 and the movable mold 20. The cavity surfaces 31 and 31 are surfaces that are in contact with the molten metal 2, and are molding surfaces of the casting mold 1.

A plunger sleeve 41 that temporarily stores the molten metal 2 when the molten metal 2 is injected into the cavity 30 is fixed to the fixed mold 10, and a plunger chip 42 for injecting the molten metal 2 in the plunger sleeve 41 into the cavity 30 is provided axially movably with respect to the plunger sleeve 41. This plunger sleeve 41 and this plunger chip 42 are provided in the casting mold 1 as casting members, and an inner lateral surface of the plunger sleeve 41 and a tip end surface of the plunger chip 42 are in contact with the molten metal 2.

### [Surface Treatment Process]

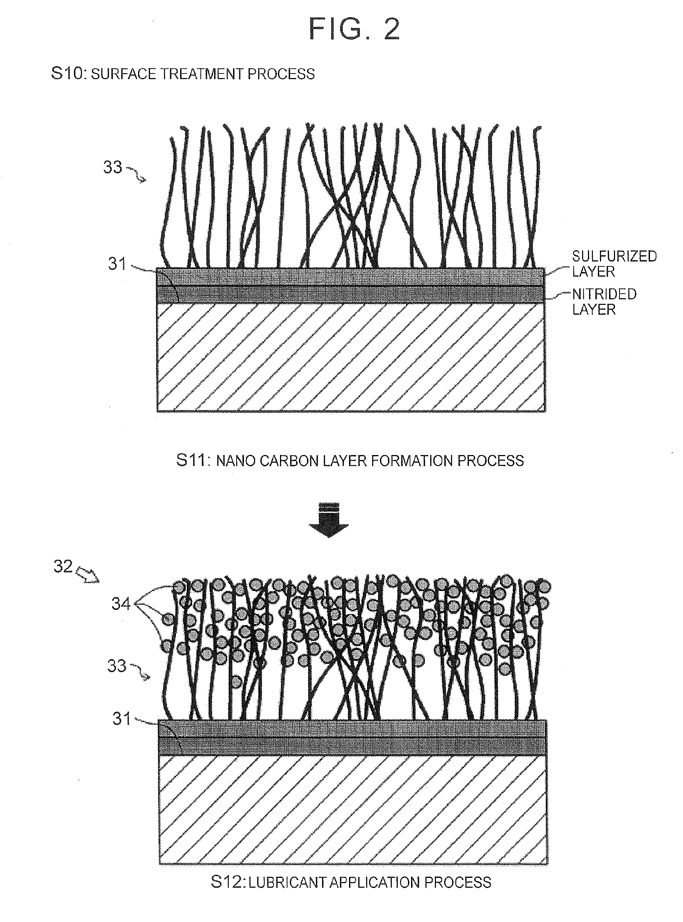

As shown in FIG. 2, through a surface treatment process S10, the cavity surface 31 as a contact surface with the molten metal 2 is subjected to a surface treatment, and a membrane 32 is formed. This surface treatment process S10 enhances the mold releasability and fluidity of the cavity surface 31 and makes a process of applying a mold releasing agent unnecessary.

The surface treatment process S10 includes a process S11 of forming a nano carbon layer 33 on the cavity surface 31, and a process S12 of applying a lubricant 34 onto the nano carbon layer 33.

That is, the membrane 32 that is formed on the cavity surface 31 is configured to include the nano carbon layer 33 and the lubricant 34.

The nano carbon layer 33 is constituted by a nano carbon group such as a carbon nano coil, a carbon nano tube, a carbon nano filament and the like, and separates out on the cavity surface 31. Irregularities of at least 10 µm or less, preferably irregularities in the nano-order (e.g., equal to or smaller than 100 nm) are formed on the surface of the cavity surface 31. In this manner, the nano carbon layer 33 has an irregular shape on the surface thereof, thereby enhancing the efficiency of collecting the lubricant 34.

In the nano carbon layer formation process S11, a treatment of forming the nano carbon layer 33 on the cavity surface 31 is carried out using a known art.

For example, the casting member (the fixed mold 10 or the movable mold 20) is put into an atmosphere furnace, and is purged of air in a depressurized state. After that, nitrogen gas is caused to flow to create a nitrogen atmosphere. The temperature of the casting member is raised while causing reactive gases (hydrogen sulfide gas, acetylene gas, and ammonia gas) to flow therethrough. Thus, the surface of the cavity surface 31 is covered with the nano carbon layer 33, and a nitrided layer and a sulfurized layer are formed between the cavity surface 31 and the nano carbon layer 33.

The lubricant 34 includes a pulverulent body, which is constituted by BN (boron nitride), graphite, talc or silica, as a main component, and is used as a pulverulent body, a solid or a liquid. It is preferable that these pulverulent bodies have a layered crustal structure. Besides, it is preferable to use a pulverulent body whose powder diameter is smaller than the size of irregularities that emerge on the surface of the nano carbon layer 33.

Considering the operability of an application operation, it is preferable that the lubricant 34 be solid. For example, the application operation can be simplified by solidifying the lubricant 34 by mixing the aforementioned pulverulent body with a fatty acid wax and coagulating the mixture.

Furthermore, considering the operability, operation cost and the like of the application operation, it is more preferable that the lubricant 34 be liquid. For example, the application operation can be simplified, and the cost of the operation can be reduced, by dispersing the aforementioned pulverulent body in a solvent and configuring the lubricant 34 as a sprayable lubricant.

In the lubricant application process S12, the lubricant 34 is applied onto the nano carbon layer 33 that is formed on the cavity surface 31. The pulverulent body contained in the lubricant 34 enters the irregularities on a nano scale, which are formed on the nano carbon layer 33. Thus, the surface of the nano carbon layer 33 is smoothed, and the mold release resistance of the cavity surface 31 can be reduced. Besides, due to the entrance of the lubricant 34 into the irregularities of the nano carbon layer 33, the efficiency of collecting the lubricant 34 has been enhanced. Therefore, good operability is realized in the lubricant application process S12.

In the case where the lubricant 34 is made powdery, the lubricant application process S12 is performed through an operation of pouring the lubricant 34 onto the nano carbon layer 33. Besides, in the case where the lubricant 34 is made solid, the lubricant application process S12 is performed through an operation of applying the lubricant 34 onto the nano carbon layer 33. In the case where the lubricant 34 is made liquid, the lubricant application process S12 is performed through an operation of spraying the lubricant 34 etc.

The lubricant application process S12 is repeatedly carried out after a predetermined number of times of casting shot, in order to maintain the density of the pulverulent body present in a surface layer of the nano carbon layer 33, namely, the function of the lubricant 34.

Incidentally, the frequency with which the lubricant 34 is applied can be set for each region in accordance with the shape of the cavity of the casting mold 1, and can be set in consideration of the flow of the molten metal 2, the flow of heat in the casting mold 1, and the like.

As described above, on the cavity surface 31 of the mold that has undergone the surface treatment process S10, the nano carbon layer 33 is formed on the mold base material, and the lubricant 34 covering the nano carbon layer 33 is applied. Thus, the lubricant 34 is collected by the irregularities on the surface of the nano carbon layer 33, whereby the surface of the nano carbon layer 33 is smoothed. That is, the surface of the membrane 32 that is formed on the cavity surface 31 is smoothed.

In this manner, the lubricant 34 is collected on the cavity surface 31 to form the nano carbon layer 33 having a smooth surface, whereby the mold release resistance of the casting mold 1 is reduced, the mold releasability is enhanced, and the use of a mold releasing agent is made unnecessary. Besides, the BN, graphite, talc or silica contained in the lubricant 34 does not enter the mold base material, and hence continues to be held by the nano carbon layer 33. Thus, the fluidity of the cavity surface 31 is maintained.

### [Survival Evaluation Test of Membrane]

Molds in three states (a) to (c) shown below were prepared, were subjected to a surface treatment using one of BN, graphite, talc and silica as a main component of the lubricant 34 respectively, and then were subjected to a casting process without using a mold releasing agent. In this case, an evaluation test was conducted as to the limit number of times of the survival of the membrane 32.
(a) The casting mold 1 (this embodiment of the invention) that is obtained by forming the nano carbon layer 33 on the surface of the base material and applying the lubricant 34 thereto.
(b) A first comparative mold that is obtained by subjecting a surface of a base material to a shot treatment and applying the lubricant 34 thereonto.
(c) A second comparative mold that is obtained by applying the lubricant 34 to a surface of a base material.

A result of the survival evaluation test is shown in Table 1.

**[Table 1]**

| | BN | Graphite | Talc | Silica |
|---|---|---|---|---|
| (a) Casting Mold 1 | 70 | 5 | 5 | 5 |
| (b) First Comparative Mold | 4 | 2 | 2 | 2 |
| (c) Second Comparative Mold | 1 | 1 | 1 | 1 |

A comparison between (a) the casting mold 1 as this embodiment of the invention and (b) the first comparative mold subjected to the shot treatment reveals that the number of times of survival is small in the case where the shot treatment is carried out. This is considered to result from the size of the irregularities that are formed on the surface of the base material. It is inferred that the irregularities resulting from the shot treatment exhibit a low capacity to collect the lubricant 34, and that a large amount of the lubricant 34 is depleted (peels off etc.) during casting.

That is, it is understood that the embodiment of the invention in which the nano carbon layer 33 is formed on the base material and the lubricant 34 is applied thereonto is preferable.

Besides, the number of times of survival of the casting mold 1 that employs BN as the lubricant 34 is 70, and the casting mold 1 turns out to be most effective. This is considered to result from the presence of a nitrided layer between the nano carbon layer 33 and the base material in the nano carbon layer formation process S11.

That is, the embodiment of the invention in which the lubricant 34 having BN as a main component is applied to the nano carbon layer 33 turns out to be most effective and most preferable.

### [BN Evaluation Test]

Next, an evaluation test will be described. In this evaluation test, after casting was carried out 1000 times using (a) the casting mold 1 that is obtained by forming the nano carbon layer 33 on the cavity surface 31 and applying the lubricant 34, which has BN as a main component, to the nano carbon layer 33, and the two comparative casting molds that are each obtained by applying a conventional mold releasing agent to a cavity surface for each cycle of casting, the cross-sections of membranes formed on the surfaces of the base materials were observed.

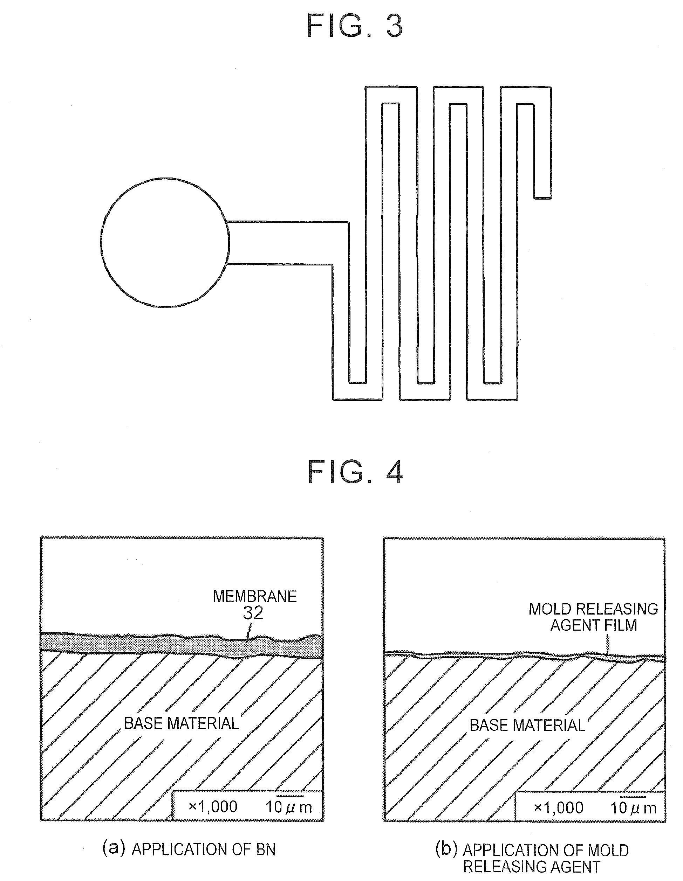

The casting mold 1 and the comparative molds in this test are identical in cavity shape. As shown in FIG. 3, those which can cast a cast that is shaped by being bent in a crank manner a plurality of times were used. Besides, as for (a) the casting mold 1, the lubricant 34 having BN as a main component was applied every time casting was carried out 50 times. As for (b) the comparative molds, the mold releasing agent was applied for each casting cycle, and casting was repeated.

FIG. 4 includes schematic views of images obtained by cutting the casting molds (a) and (b) and photographing the cross-sections of the membranes formed on the surfaces of the base materials respectively after casting was repeated 1000 times on respective conditions.

As shown in FIG. 4, it is understood that the membrane 32 with a sufficient thickness survives on the surface of the base material of (a) the casting mold 1 according to this embodiment of the invention, in comparison with mold releasing agent films that are formed on the surfaces of the base materials of (b) the comparative molds respectively. It is thus understood that the embodiment of the invention in which the lubricant 34 having BN as a main component is applied to the nano carbon layer 33 is excellent in forming and maintaining the membrane. That is, even after carrying out casting a large number of times, the sufficient membrane 32 can be maintained, and the mold releasability and fluidity thereof can be guaranteed.

### [Thermal Insulation Test of Membrane]

Next, a result obtained by conducting a test of measuring thermal insulation properties of membranes will be shown.

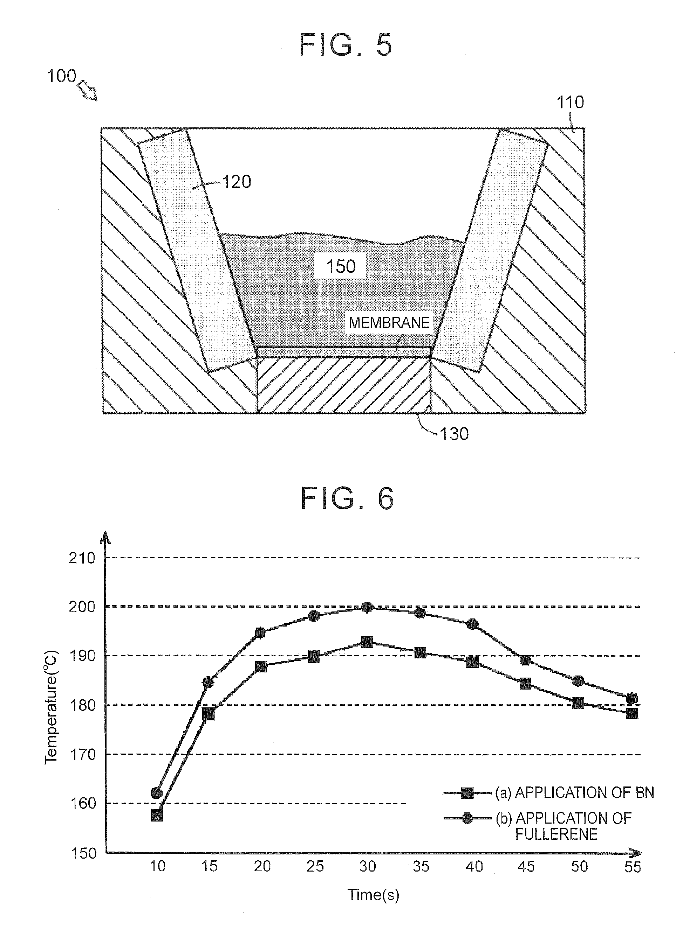

As shown in FIG. 5, a testing device 100 employed for this test is constituted by a steel material. A thermal insulating material 120 is arranged on a lateral surface of a mold frame 110 having a recess with a trapezoidal cross-section. A test piece 130 is arranged on a bottom surface of the mold frame 110, and various membranes are formed on a surface thereof. The test piece 130 used herein is made of SKD61 as a material, and has a diameter of 20 mm and a thickness of 7 mm. Two membranes, namely, (a) the membrane 32 according to this embodiment of the invention and (b) a comparative membrane that is obtained by forming a nano carbon layer and applying thereonto a lubricant as a fullerene group were used.

The thermal insulation test of the membranes was conducted by adjusting the mold frame 110 to 80°C, pouring a molten metal 150 at 700°C thereinto, measuring a temperature of the test piece 130 at intervals of 5 seconds, and comparing degrees of rise in the temperature with one another. This measurement result is shown in FIG. 6. The axis of abscissa of FIG. 6 represents an elapsed time after the pouring of the molten metal 150, and the axis of ordinate of FIG. 6 represents a temperature of the test piece 130.

As shown in FIG. 6, (a) the degree of rise in the temperature of the membrane 32 that is obtained by applying the lubricant 34, which has BN as a main component, to the nano carbon layer 33 is gentler than the degree of rise in the temperature of the comparative membrane that is obtained by applying the fullerene group to the nano carbon layer. That is, it is revealed that the thermal insulation properties of the membrane 32 are better than the thermal insulation properties of the comparative membrane.

It is generally known that the thermal insulation properties of the membrane are correlated with the fluidity, and it is known that the membrane with good thermal insulation properties exhibits high fluidity. That is, it has been demonstrated that the fluidity of the membrane 32 according to this embodiment of the invention is better than the fluidity of the comparative membrane that is obtained by applying the fullerene group to the nano carbon layer.

### [Method of Manufacturing Solid Lubricant]

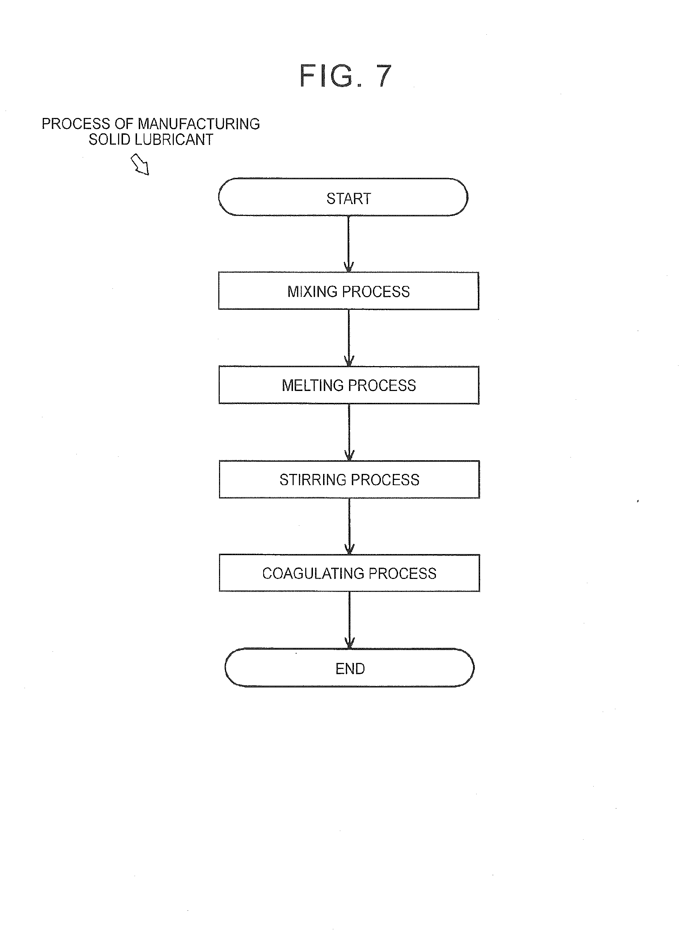

A manufacturing method in the case where a solid lubricant is applied as the lubricant 34 will be described hereinafter with reference to FIG. 7.

As shown in FIG. 7, a process of manufacturing the solid lubricant includes a process of mixing a main component powder of a fixed quantity of the lubricant 34 with a fatty acid wax, a process of melting the fatty acid wax by heating the mixture through the use of a drying machine, a process of stirring and homogenizing the heated and liquefied mixture, and a process of pouring the mixture into a mold of an arbitrary shape and coagulating the mixture. The solid lubricant 34, which has been molded into an arbitrary shape, is obtained through this series of processes.

The fatty acid wax contained in the solid lubricant 34 preferably has a melting point that allows the fatty acid wax to sufficiently melt in the aforementioned heating/melting process. For example, a fatty acid wax with a melting point equal to or lower than 100°C is preferable.

A mass ratio between the main component powder of the lubricant 34 and the fatty acid wax may be selected in accordance with the dispersibility in the heating/melting process, the component characteristics of the main component powder, and the like. For example, however, in the case where the solid lubricant 34 that has graphite as a main component is manufactured, it is preferable that the blending ratio between the main component powder (graphite) and the fatty acid wax be set approximately as the main component powder (graphite) : the fatty acid wax = 3:7.

In the surface treatment process S10 (the lubricant application process S12) employing the solid lubricant 34 manufactured as described above, the lubricant 34 does not splash, and can be manually applied. Thus, the operability of the application operation can be enhanced.

Besides, when the lubricant 34 containing the fatty acid wax is applied to perform the casting process, an effect of enhancing the retention force of the lubricant 34 due to the enhanced affinity with the nano carbon layer 33 as a result of carbonization of the fatty acid wax is anticipated.

The embodiment of the invention in which the membrane 32 is formed by subjecting each of the cavity surfaces 31 and 31 as the contact surfaces with the molten metal 2 to the surface treatment in a corresponding one of the fixed mold 10 and the movable mold 20 as the casting members included in the casting mold 1 has been described above. However, the surface that is subjected to the surface treatment to form the membrane 32 is not limited as described above. The membrane 32 may be formed on each of the inner lateral surface of the plunger sleeve 41 and the tip end surface of the plunger chip 42 via the similar surface treatment process S10.

In this case, due to an improvement in thermal insulation properties by the membrane 32, the temperature of the molten metal 2 can be restrained from falling in the plunger sleeve 41 in which the molten metal 2 is temporarily stored. Also, due to the enhancement of the fluidity, the resistance between the molten metal 2 and the plunger sleeve 41 can be reduced, and the pressure loss can be reduced. The amount of heat removed from the tip of the plunger chip 42 can be reduced.

As described above, by forming the membrane 32 by subjecting the contact surfaces with the molten metal 2 in the plunger sleeve 41 and the plunger chip 42, each of which has a large surface area in contact with the molten metal 2 and has a great influence on the injection pressure, to the surface treatment, the casting condition in the casting process employing the casting mold 1 can be softened, and a contribution toward quality improvement can be made.

### INDUSTRIAL APPLICABILITY

The invention is applicable to an art of subjecting a molten metal contact surface of a casting member to a surface treatment to reduce the mold release resistance and enhance the fluidity.

### DESCRIPTION OF REFERENCE NUMERALS

- 1: CASTING MOLD
- 2: MOLTEN METAL
- 10: FIXED MOLD (CASTING MEMBER)
- 20: MOVABLE MOLD (CASTING MEMBER)
- 30: CAVITY
- 31: CAVITY SURFACE (MOLTEN METAL CONTACT SURFACE)
- 32: MEMBRANE
- 33: NANO CARBON LAYER
- 34: LUBRICANT
- 41: PLUNGER SLEEVE (CASTING MEMBER)
- 42: PLUNGER CHIP (CASTING MEMBER)

## Claims

1. A casting member **characterized in that**
a nano carbon layer that is constituted by a nano carbon group is formed on a molten metal contact surface of a casting member, and
a lubricant having a pulverulent body that is constituted by BN, graphite, talc or silica as a main component is applied onto the nano carbon layer.

2. The casting member according to claim 1, wherein
a nitrided layer is formed between the nano carbon layer and the cavity surface when the nano carbon layer is formed, and
the lubricant that is applied to the nano carbon layer has a BN pulverulent body as a main component.

3. The casting member according to claim 1 or 2, wherein
irregularities of 10 µm or less are formed on a surface of the nano carbon layer, and
a powder diameter of the pulverulent body contained in the lubricant is smaller than a size of the irregularities of the nano carbon layer.

4. A casting method **characterized by** comprising:
a process of forming a nano carbon layer that is constituted by a nano carbon group, on a molten metal contact surface of a casting member; and
a process of subjecting the molten metal contact surface of the casting member to a surface treatment by applying a lubricant, which has a pulverulent body constituted by BN, graphite, talc or silica as a main component, onto the nano carbon layer.

5. The casting method according to claim 4, wherein
a nitrided layer is formed between the nano carbon layer and the molten metal contact surface of the casting member in the process of forming the nano carbon layer on the molten metal contact surface of the casting member, and
the lubricant that is applied to the nano carbon layer has BN as a main component.

6. The casting method according to claim 4 or 5, wherein
irregularities of 10 µm or less are formed on a surface of the nano carbon layer, and
a powder diameter of the pulverulent body contained in the lubricant is smaller than a size of the irregularities of the nano carbon layer.

7. A method of manufacturing a lubricant used for the casting method according to any one of claims 4 to 6, comprising:
mixing a pulverulent body contained in the lubricant with a fatty acid wax;
heating a resultant mixture and melting the fatty acid wax to liquefy the mixture;
stirring and homogenizing the liquefied mixture; and
coagulating the mixture in a mold of an arbitrary shape to manufacture a solid lubricant.
